# EUROPÄISCHE PATENTSCHRIFT

(11) **EP 2 965 630 B1**
(45) Veröffentlichungstag und Bekanntmachung des Hinweises auf die Patenterteilung: **07.12.2016**
(21) Anmeldenummer: 14176068.6
(22) Anmeldetag: 08.07.2014
(51) Int. Cl.: B08B 9/00, A22C 11/02

(54) **Füllmaschine sowie Verfahren zum Zwischenreinigen einer Füllmaschine**
Filling machine and method for interim cleaning of a filling machine
Machine de remplissage et procédé de nettoyage intermédiaire d'une machine de remplissage

(43) Veröffentlichungstag der Anmeldung: 13.01.2016
(73) Patentinhaber: Albert Handtmann Maschinenfabrik GmbH & Co. KG, 88400 Biberach (DE)
(72) Erfinder: Maile, Bernd, 88422 Oggelshausen (DE); Staudenrausch, Martin, 88400 Biberach (DE); Widmann, Martin, 88214 Ravensburg (DE); Sailer, Günter, 88471 Laupheim (DE)
(74) Vertreter: Grünecker Patent- und Rechtsanwälte PartG mbB

(56) Entgegenhaltungen:
- EP-A2- 2 384 635
- Effiong Essien ET AL: "Sausage manufacture Principles and practice" In: "Sausage Manufacture", 2. September 2003 (2003-09-02), CRC Press, XP055161636, ISBN: 978-0-20-349868-2 * Seite 67 - Seite 71 *

## Beschreibung

Die Erfindung betrifft eine Füllmaschine sowie ein Verfahren zum Zwischenreinigen einer Füllmaschine.

Aus der EP 23 84 635 A2 ist bereits eine Füllmaschine zur Herstellung von Würsten gemäß dem Oberbegriff des Anspruchs 1 bekannt.

Aufgrund des universellen Einsatzbereichs von Füllmaschinen, insbesondere Vakuumfüllmaschinen, kommt es während der Produktion auf diesen Maschinen häufig zu sogenannten Produktwechseln. Das heißt, innerhalb einer Arbeitsschicht werden mehrere verschiedene Produkte hergestellt. Um dabei Verunreinigungen oder Vermischungen des Folgeprodukts durch Reste des zuvor abgefüllten Produkts zu vermeiden, muss der gesamte produktführende Bereich und alle darin befindlichen Einbauteile manuell mittels Schaum- und/oder Hochdruckverfahren gereinigt werden.

Um alle Bereiche des Produktbereichs der Maschine reinigen zu können, wird wie folgt vorgegangen:
1. Öffnen eines Förderwerks, insbesondere Öffnen eines Schwenkgehäuses und Entnahme aller zu reinigenden Komponente, wie beispielsweise Rotor, Pumpenflügel, Spannexzenter etc.
2. Reinigung der entnommenen Komponenten mit Hochdruckreiniger oder Schaum.
3. Reinigung aller produktführenden Bereiche der Füllmaschine, d.h. Trichterinnenbereich, gesamter Zuführbereich, Förderwerkbereich, Auslaufbereich mittels Hochdruckreiniger oder Schaum.
4. Einbau der entnommenen Komponenten und Verschließen des Förderwerks bzw. des Schwenkgehäuses.

Während dieser Zeit sind weitere Vorbereitungen zur Umstellung auf das Folgeprodukt an der Maschine nicht durchführbar. Die Reinigung ist aufwendig und dauert relativ lange, typischerweise ca. 15 min, jedoch bei manchen Produkten bis zu 60 min. Da sämtliche Reinigungsschritte manuell durchgeführt werden, ist eine prozesssichere Reinigung nicht gewährleistet. Hiervon ausgehend liegt der vorliegenden Erfindung die Aufgabe zugrunde, die für eine Zwischenreinigung benötigte Zeit und somit die Stillstandzeit der Maschine zu reduzieren, wobei die Reinigung gleichzeitig prozesssicherer und nachvollziehbarer als bisher erfolgen soll.

Erfindungsgemäß wird diese Aufgabe durch die Merkmale der Ansprüche 1 und 12 gelöst.

Die erfindungsgemäße Füllmaschine wird insbesondere zur Herstellung von Würsten, d.h. einem länglichen Strang, verwendet. Eine solche Füllmaschine ist vorteilhafterweise als Vakuumfüllmaschine ausgebildet. Eine solche Füllmaschine weist neben einem Trichter zum Einfüllen von pastöser Masse ein Förderwerk, insbesondere eine Flügelzellenpumpe, auf zum Fördern der pastösen Masse in Richtung einer Auslassöffnung. Die Füllmaschine weist oberhalb oder innerhalb des Trichters mindestens eine Spritzeinrichtung zum Verteilen von Reinigungsmedium auf die Trichterinnenwand auf. Somit ist keine manuelle Reinigung notwendig. Die Strahlen des Reinigungsmediums entfernen Produktreste im Trichterbereich. Das Reinigungsmedium-Produktgemisch wird durch das Förderwerk zur Auslauföffnung bewegt und gelangt durch die Auslauföffnung wieder aus der Füllmaschine. Auf diese Weise wird der gesamte produktführende Bereich der Maschine gereinigt. Da das Reinigungsmedium auch in dem Förderwerk, d.h. z.B. in den Förderzellen einer Flügelzellenpumpe bewegt wird, können die einzelnen Kammern des Förderwerks sehr gut gereinigt werden. Gemäß der Erfindung kann dabei die Spritzeinrichtung entweder baulich mit der Füllmaschine, beispielsweise über eine entsprechende Befestigungseinrichtung, z.B. am Trichter oder einem Deckel, befestigt sein. Es ist jedoch auch möglich, dass die Spritzeinrichtung an einer separaten Halterung gehalten wird, derart, dass sie während einer Zwischenreinigung oberhalb oder innerhalb des Trichters angeordnet ist. Eine entsprechende Halterung kann dann beispielsweise an der Decke, Wand oder dem Boden des Produktionsraums befestigt bzw. gehalten sein.

Die exakte Lage und Ausführung der Spritzeinrichtung wird je nach Anwendung festgelegt. Die Spritzeinrichtung kann mit unterschiedlichen Strahlformen ausgestattet sein. Die Spritzeinrichtung kann als Sprühkopf, insbesondere Sprühkugel, ausgebildet sein oder aber als Düsenkopf, insbesondere Düsenrad. Die entsprechenden Köpfe können dabei ein- oder mehrstrahlig ausgebildet sein. Ein Sprühkopf bzw. eine Sprühkugel ist ein einfaches Mittel zum Verteilen der Reinigungsflüssigkeit auf der Trichterwand. Hierfür weist der Sprühkopf bzw. die Sprühkugel mehrere Bohrungen auf, durch die jeweils ein Strahl des Reinigungsmediums auf die Trichterwand trifft. Bei der Reinigung werden alle Bohrungen zeitgleich durchströmt.

Die Spritzeinrichtung kann jedoch auch als Kopf ausgebildet sein, der mindestens eine, vorzugsweise mehrere Düsen aufweist, die das Reinigungsmedium auf die Trichterinnenwand spritzen.

Bei einer statischen Spritzeinrichtung trifft der jeweilige Strahl jeweils an die gleiche Stelle auf die Trichterinnenwand. Daher ist es vorteilhaft, wenn die Spritzeinrichtung beweglich ausgebildet ist, derart, dass der oder die Strahlen nicht an der gleichen Stelle der Trichterwand auftreffen. Vorteilhafterweise kann die Spritzeinrichtung so ausgebildet sein, dass sie sich um eine erste Achse drehen kann, d.h. insbesondere rotierend ausgebildet ist und sich um ihre Mittelachse drehen kann. Eine entsprechende rotierende Spritzeinrichtung ermöglicht, dass durch die Rotation die gesamte Innenoberfläche des Trichters erreicht werden kann. Die Wasserstrahlen reinigen die Trichterinnenfläche und Einbauteile. Die Spritzeinrichtung kann dabei so ausgebildet sein, dass sie vom Wasserdruck angetrieben wird und eine rotierende Bewegung ausführt. Alternativ dazu kann auch ein entsprechender elektrischer, pneumatischer, etc. Antrieb vorgesehen sein.

Gemäß einer besonderen Ausführungsform ist es auch möglich, dass sich die Spritzeinrichtung zusätzlich um eine zweite Achse dreht, die unter einem Winkel, vorzugsweise senkrecht zur ersten Achse, verläuft. Das heißt, dass entsprechende Düsen sowohl beispielsweise eine Rotation in einer ersten Richtung, d.h. eine horizontale Rotation durchführen und gleichzeitig eine Rotation in einer zweiten Richtung, d.h. eine vertikale Rotation. Ein entsprechender Düsenaufbau ermöglicht eine besonders gründliche Reinigung.

Gemäß einer bevorzugten Ausführungsform kann die Spritzeinrichtung im Trichter auch auf und ab bewegbar sein und/oder seitlich hin und her bewegbar sein und/oder in Bezug zur Längsachse L des Trichters verschwenkbar sein. Die Spritzeinrichtung kann auch so ausgebildet sein, dass sie manuell beweglich ist.

Bei den entsprechenden Spritzeinrichtungen mit mehreren Strahlen ist vorteilhaft, wenn sich die unterschiedlichen Spritzwinkel (beispielsweise Winkel zwischen Strahl und Längsachse L des Trichters) voneinander unterscheiden.

Vorteilhafterweise weist der Trichter einen Deckel auf. Dies kann ein zusätzlicher Spritzschutzdeckel sein (z.B. aus transparentem Material oder mit Schauglas), der auf die Oberkante des Trichters aufgesetzt ist oder aber der bereits in der Füllmaschine vorgesehene Deckel eines Trichters. Somit wird bei geschlossenem Trichter verhindert, dass Spritzwasser nach außen tritt. Vorteilhafterweise ist die Spritzeinrichtung am Deckel befestigt. Dies hat den Vorteil, dass keine zusätzlichen Halterungen im Trichter vorgesehen sein müssen, die den eigentlichen Betrieb der Füllmaschine, insbesondere beim Einfüllen des Füllguts, behindern würden. Somit kann die Spritzeinrichtung kostengünstig und einfach in die Füllmaschine integriert werden. Vorteilhafterweise weist der Deckel einen Anschluss für das Reinigungsmedium, d.h. für eine entsprechende, vorzugsweise flexible Leitung, Schlauch, etc., auf. In diesem Bereich stört der Anschluss nicht die Funktionen der Füllmaschine und bei Bedarf kann beispielsweise ein Schlauch oder eine entsprechende Verrohrung dauerhaft oder temporär angeschlossen werden. Aber auch eine am Trichter befestigte einschwenkbare Vorrichtung ist möglich.

Vorteilhafterweise umfasst die Füllmaschine eine Steuerung, die ein Zwischenreinigungsprogramm, d.h. eine Zwischenreinigung vor einem Produktwechsel, steuert. Diese Steuerung weist einen Speicher auf, in dem unterschiedliche Reinigungsprogramme abgespeichert sind. Somit kann für ein bestimmtes Produkt ein entsprechend passendes Reinigungsprogramm ausgewählt werden. Dies ist wichtig, da sich die einzelnen Produkte, die während einer Arbeitsschicht von einer Füllmaschine verarbeitet werden, stark voneinander unterscheiden. Durch das Speichern unterschiedlicher Programme für unterschiedliche Produkte kann Reinigungsmedium und Energie gespart werden, wobei eine zuverlässige und ausreichende Reinigung sichergestellt ist.

Wenn gemäß einem bevorzugten Ausführungsbeispiel in Förderrichtung der pastösen Masse bzw. des Reinigungsmediums ein Füllorgan angeordnet ist, insbesondere ein Füllrohr oder ein Füllwolf oder ein Füllstromteiler, können die produktführenden Bereiche der Zusatzgeräte ebenfalls durch das Reinigungsmedium gereinigt werden. Die Auslassöffnung für das Reinigungsmedium befindet sich dann am jeweiligen Auslassende des Füllorgans.

Die Reinigungsflüssigkeit, die über die Auslassöffnung aus der Füllmaschine gelangt, wird beispielsweise über eine Ablaufleitung verworfen, insbesondere am Ende des Zwischenreinigungsschritts. Es ist jedoch auch möglich, eine Rückführleitung vorzusehen, über die das Reinigungsmedium zumindest teilweise im Kreislauf C zur Spritzeinrichtung rückgeführt wird. Vorteilhafterweise befindet sich dann zwischen Auslassöffnung und Spritzeinrichtung ein Sieb oder Filter, der Schmutzrückstände weitgehend zurückhält. Durch das Führen des Reinigungsmediums im Kreislauf kann wesentlich Energie und Wasser gespart werden. Es ist auch möglich, nur einen Teil des Reinigungsmediums zurückzuführen, und frisches, z.B. heißes, Medium zuzudosieren.

Vorteilhafterweise ist wenigstens eine Spritzeinrichtung vorgesehen, die derart angeordnet ist, dass ein Strahl in den Einlass des Förderwerks spritzt. Somit können auch die einzelnen Zellen des Förderwerks, insbesondere der Flügelzellenpumpe, mechanisch durch den Strahl gereinigt werden. Wenn sich das Förderwerk dreht, können durch den Strahl alle Zellen erreicht werden.

Die Steuerung steuert den Reinigungsprozess derart, dass während des Reinigungsprozesses das Förderwerk zumindest zeitweise läuft. Es ist dabei möglich, dass das Förderwerk vorwärts läuft oder aber auch im Wechsel vorwärts oder rückwärts läuft. Wenn das Förderwerk nicht nur in eine Richtung läuft, bringt dies den Vorteil mit sich, dass es zu einer noch besseren Durchmischung und Reinigung kommt. Ganz allgemein bedeutet hier "zumindest zeitweise", dass das Förderwerk während des Zwischenreinigungsschrittes zumindest zeitweise angetrieben wird, entweder während mit der Spritzeinrichtung Reinigungsflüssigkeit auf die Trichterinnenwand verteilt wird oder aber auch nachdem die Spritzeinrichtung die Reinigungsflüssigkeit auf die Trichterinnenwand verteilt hat, jedoch noch vor dem Produktwechsel.

Bei einem Verfahren zum Zwischenreinigen einer Füllmaschine wird mit Hilfe einer Spritzeinrichtung Reinigungsmedium auf die Trichterinnenwand verteilt, während des Zwischenreinigungsschritts läuft zumindest zeitweise das Förderwerk der Füllmaschine. Unter Zwischenreinigung versteht man hier die Reinigung vor einem Produktionswechsel, wobei während einer Arbeitsschicht mindestens ein Produktwechsel stattfindet.

Bei dem erfindungsgemäßen Verfahren wird demnach die Füllmaschine zunächst mit einem ersten Produkt betrieben. Nach Ende dieses Schritts erfolgt ein Zwischenreinigungsschritt mittels Spritzeinrichtung, dann folgt der Produktwechsel und das Betreiben der Füllmaschine mit einem zweiten Produkt. Die Schritte Zwischenreinigung und Produktwechsel und Betreiben der Füllmaschine mit einem zweiten Produkt, d.h. Schritte b) und c) werden 0 bis n-mal wiederholt (n ∈ N). Am Ende der Arbeitsschicht erfolgt dann manuell die Hauptreinigung, bei der, wie zuvor auch im Zusammenhang mit dem Stand der Technik beschrieben wurde, das Förderwerk geöffnet wird, einzelne Komponenten des Förderwerks, wie insbesondere Rotor und Pumpenflügel, ausgebaut und gereinigt werden. Die Hauptreinigung erfolgt dann manuell mit Hochdruckreiniger oder Schaum. Nach der Hauptreinigung kann eine neue Arbeitsschicht beginnen. Es ist möglich, dass auch vor der manuellen Hauptreinigung noch ein Zwischenreinigungsschritt mittels Spritzeinrichtung durchgeführt wird, was die manuelle Hauptreinigung wesentlich vereinfacht. Im einfachsten Fall wird die Spritzeinrichtung manuell gehalten und bewegt.

In Schritt b) werden die Reinigungsparameter des Zwischenreinigungsschritts in Abhängigkeit des letzten verarbeiteten Produkts eingestellt. Vorzugsweise wird ein entsprechendes Reinigungsprogramm aus mehreren in einer Steuerung gespeicherten Reinigungsprogrammen in Abhängigkeit des letzten verarbeiteten Produkts ausgewählt. Somit kann Reinigungsmittel und Energie gespart werden und eine korrekte ausreichende Reinigung sichergestellt werden. Es ist also möglich, dass in der Steuerung ein bestimmtes Reinigungsprogramm einem oder mehreren Produkten zugeordnet ist. Somit kann der Bediener in die Steuerung eingeben, mit welchem Produkt gearbeitet wurde, und die Steuerung wählt automatisch ein zugeordnetes Reinigungsprogramm aus.

Entsprechende Parameter umfassen unter anderem beispielsweise die Temperatur des jeweiligen Reinigungsmediums und/oder den Druck des Reinigungsmediums und/oder die Zeitdauer der Zwischenreinigung. Auch die Menge von eventuell hinzudosiertem Reinigungsmittel und die Dauer des Spülvorgangs mit klarem Wasser sind als Parameter hinterlegt. Die vorliegende Erfindung wird nachfolgend unter Bezugnahme der folgenden Figuren näher erläutert.
- Fig. 1: zeigt grob schematisch eine Füllmaschine gemäß einer Ausführungsform der vorliegenden Erfindung.
- Fig. 2: zeigt grob schematisch eine Füllmaschine gemäß einer weiteren Ausführungsform der vorliegenden Erfindung.
- Fig. 3a: zeigt ebenfalls grob schematisch eine Füllmaschine gemäß einem weiteren Ausführungsbeispiel der vorliegenden Erfindung.
- Fig. 3b: zeigt grob schematisch einen Füllstromteiler.
- Fig. 4a: zeigt grob schematisch ein weiteres Ausführungsbeispiel gemäß der vorliegenden Erfindung.
- Fig. 4b: zeigt eine Aufsicht auf einen Füllwolf als Füllorgan.
- Fig. 5: zeigt grob schematisch eine weitere Ausführungsform der vorliegenden Erfindung.
- Fig. 6: zeigt grob schematisch eine weitere Ausführungsform der vorliegenden Erfindung.
- Fig. 7a: zeigt grob schematisch eine Seitenansicht einer Spritzeinrichtung in Form einer Sprühkugel.
- Fig. 7b: zeigt grob schematisch eine Spritzeinrichtung in Form eines sich um zwei Achsen drehenden Düsenrads.
- Fig. 7c: zeigt grob schematisch eine Aufsicht auf ein sich drehendes Düsenrad.
- Fig. 7d: zeigt, das in Fig. 7c gezeigte Düsenrad in einer Seitenansicht.
- Fig. 7e: zeigt einen Schnitt durch das in Fig. 7c gezeigte Düsenrad.
- Fig. 7f: zeigt schematisch eine zur Längsachse L des Trichters verschwenkte Spritzeinrichtung.
- Fig. 8: zeigt in perspektivischer Darstellung eine Fördereinrichtung, wie sie in der erfindungsgemäßen Füllmaschine verwendet werden kann.
- Fig. 9: zeigt einen Ablaufplan für das erfindungsgemäße Verfahren.

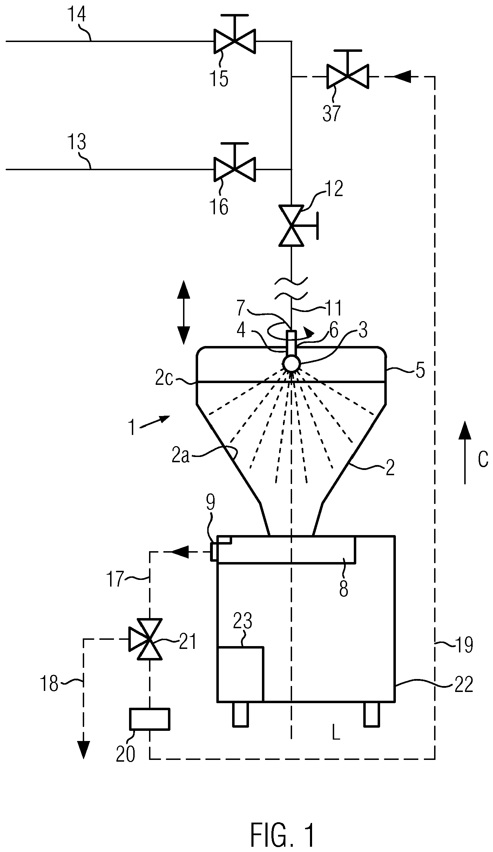

Fig. 1 a zeigt grob schematisch einen Schnitt durch eine erfindungsgemäße Füllmaschine. Eine Füllmaschine weist einen Trichter 2 auf zum Einfüllen von pastöser Masse. Der Trichter weist in diesem Ausführungsbeispiel einen Deckel 5 auf, der abnehmbar ist und auf der Oberkante 2c des Trichters 2 aufsitzt. Wenn auch nicht dargestellt, kann im oberen Bereich des Trichters eine Zufuhrleitung für pastöse Masse vorgesehen sein. Alternativ dazu kann die pastöse Masse auch in den Trichter über dem abgenommenen Deckel 5 eingebracht werden. Am unteren Ende des konisch zulaufenden Trichters 5 ist ein Förderwerk, hier z.B. in Form einer Flügelzellenpumpe, vorgesehen, über die die pastöse Masse in Richtung eines Auslasses 9 gefördert wird. Die Füllmaschine weist darüber hinaus ein Gehäuse 22 auf sowie eine Steuerung 23.

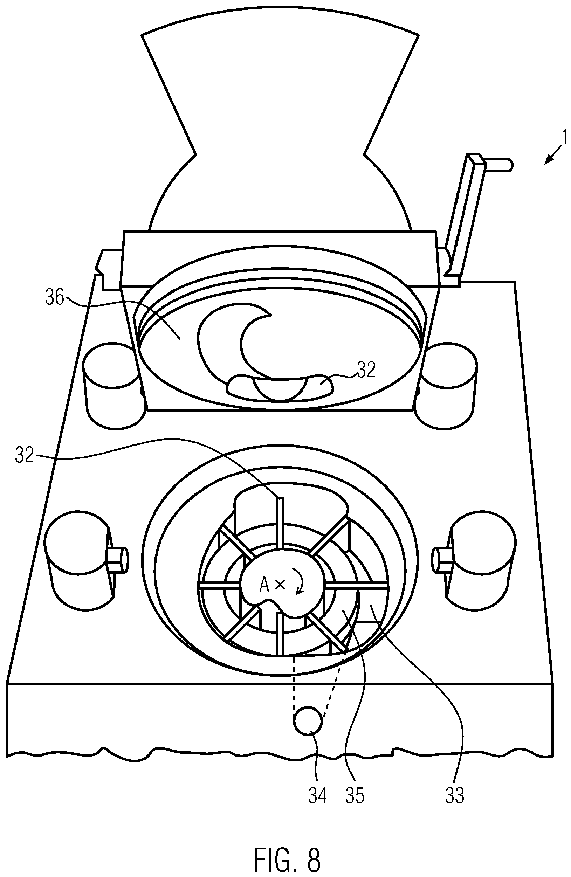

Fig. 8 zeigt eine Flügelzellenpumpe, die beispielsweise in einer Füllmaschine gemäß der vorliegenden Erfindung verwendet werden kann. Eine entsprechende Flügelzellenpumpe 8 zum Fördern von pastösen Massen weist ein Pumpengehäuse auf sowie einen Einlass 32 für die pastöse Masse und einen Auslass 34, der mit dem Auslass 9 verbunden ist. Der Einlass 32 ist mit dem Auslass des Trichters 2 verbunden, über den die pastöse Masse der Flügelzellenpumpe 8 zugeführt wird. Die Flügelzellenpumpe 8 weist in dem Pumpengehäuse einen vorzugsweise exzentrisch angeordneten, in Drehung versetzbaren Rotor 35 auf, der über eine Pumpenwelle um die Achse A angetrieben wird. Der Rotor 35 weist radial verschiebbare Flügel 33 auf, die mit der Innenkontur des Pumpengehäuses bzw. der Innenwand, dem Boden des Pumpengehäuses sowie dem Deckel 36 Flügelzellenkammern bzw. Förderzellen bildet.

Gemäß der vorliegenden Erfindung weist nun die Füllmaschine eine Spritzeinrichtung 3 auf, die entweder im Trichter 2 oder oberhalb des Trichters 2, d.h. oberhalb der Kante 2c, angeordnet ist. Es können auch mehrere Spritzeinrichtungen 3 gleichzeitig vorgesehen sein. Die Lage und Ausführung des bzw. der Spritzeinrichtungen wird je nach Anwendung festgelegt. Die Spritzeinrichtung kann über eine entsprechende Halterung bzw. Befestigung direkt an der Füllmaschine befestigt sein, oder aber über eine separate Halterung gehalten werden, derart, dass sie innerhalb oder oberhalb des Trichters liegt. Die Spritzeinrichtung 3 ist über eine Zuführleitung 4 am Trichter, hier vorzugsweise am Deckel 5, befestigt. Der Deckel weist dazu jeweils eine entsprechende Öffnung 6 auf. Ferner ist ein Anschluss 7 vorgesehen, über den eine Zuleitung für Reinigungsmedium angeschlossen werden kann. Vorzugsweise ist die Zuleitung für Reinigungsmedium zumindest im Anschlussbereich flexibel, insbesondere als Schlauch ausgebildet, so dass sie ausreichend flexibel ist, derart, dass der Deckel 5 geöffnet, insbesondere aufgeklappt, werden kann. Über die Zuleitung 11 kann über eine weitere Leitung 13 ein Reinigungsmedium, z.B. Lauge und/oder Wasser, über eine Zuleitung 14 zugeführt werden. Dabei sind entsprechende Ventile 12, 15, 16, die auch als Stellventile ausgebildet sein können, in den Leitungen vorgesehen. Wasser und Reinigungsmedium, hier z.B. Lauge, können dabei in einem bestimmten Verhältnis über die Stellventile gemischt werden. Die Verrohrung ist hier nur beispielhaft. Darüber hinaus kann auch eine nicht dargestellte Heizeinrichtung vorgesehen sein, über die das Reinigungsmedium, hier die Lauge, und/oder das Wasser auf eine vorbestimmte Temperatur aufgeheizt werden kann.

Über die Spritzeinrichtung 3 können Wasserstrahlen auf der Innenfläche 2a des Trichters 2 verteilt auftreffen und die Trichterinnenfläche und etwaige Einbauteile reinigen. Die Reinigungsflüssigkeit gelangt in das Förderwerk 8 und wird von dem Förderwerk 8 durch die Flügelzellen in Richtung Auslass 9 transportiert. Somit kommt der gesamte produktführende Bereich mit dem Reinigungsmittel in Berührung. Die Bewegung des Förderwerks fördert zusätzlich die Reinigung der einzelnen Kammern. Die Wasserstrahlen bzw. Reinigungsmediumstrahlen entfernen Produktreste im Trichterbereich und im Förderwerkbereich, wobei das Reinigungsmittel-Produktgemisch anschließend durch das Förderwerk zum Auslauf 9 bewegt wird und entweder über die Ablaufleitung 17, 18 verworfen wird oder aber zumindest teilweise im Kreislauf C über die Rückführleitung 19 zurückgeführt wird. Dazu kann ein entsprechendes Ventil 21 vorgesehen sein, über das entweder das gesamte Reinigungsmedium oder ein Anteil in die Leitung 19 geführt wird. Da das Förderwerk das Reinigungsmedium-Produktgemisch transportiert, ist für die Rücklaufleitung 19 keine gesonderte Pumpe notwendig. Es ist vorteilhaft, wenn in der Rückführleitung 19 ein Sieb bzw. Filter vorgesehen ist, der grobe Verunreinigungen zurückhalten kann. Das rückgeleitete Reinigungsmedium kann dann wieder dem Sprühkopf 3 zugeleitet werden. Dabei ist dann beispielsweise das Ventil 37 geöffnet. Wenn nur ein Teil des Reinigungsmediums zurückgeleitet wird, kann zusätzlich frisches Reinigungsmedium und/oder Wasser zudosiert werden, derart, dass eine ausreichende Reinigungsmediummenge der Spritzeinrichtung zugeführt wird.

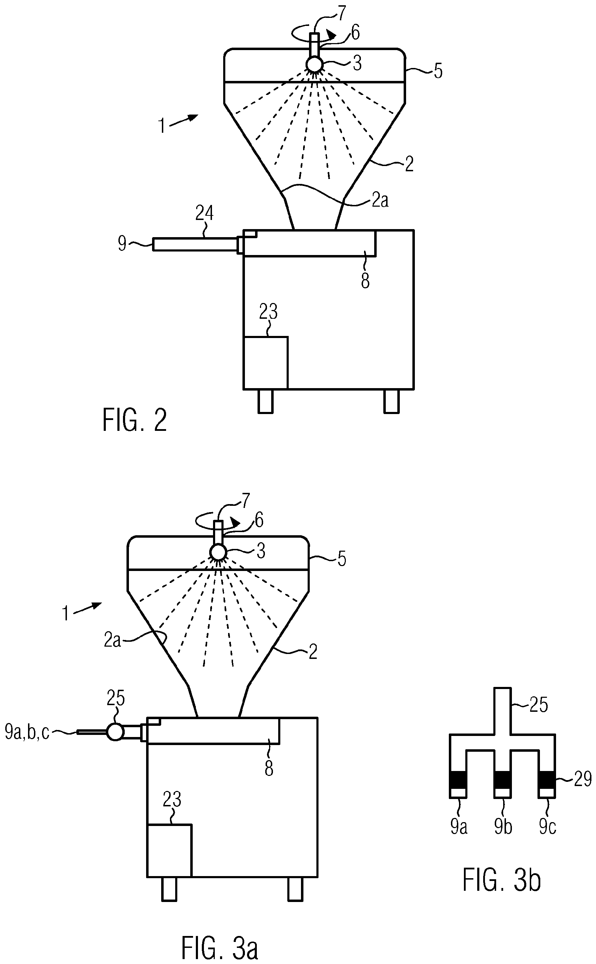

In Fig. 1 ist kein weiteres Füllorgan gezeigt. Das in Fig. 2 gezeigte Ausführungsbeispiel entspricht dem in Fig. 1 dargestellten Ausführungsbeispiel, wobei jedoch nur die wesentlichen Komponenten dargestellt sind. Es ist jedoch auch möglich, dass am Ende des Förderwerks ein Füllrohr 24 angeordnet ist, wobei das Auslassende 9 dann am Ende des Füllrohrs liegt. Das bedeutet, dass während der Reinigung auch das Innere des Füllrohrs gereinigt werden kann.

Fig. 3a entspricht den vorherigen Ausführungsbeispielen, wobei jedoch hier als Füllorgan ein Füllstromteiler 25 in Förderrichtung der pastösen Masse bzw. des Reinigungsmediums nach dem Förderwerk 8 angeordnet ist. Der Füllstromteiler weist einen ersten Leitungsabschnitt 25 auf, der sich in mehrere Leitungsabschnitte, hier drei Leitungsabschnitte, aufteilt. In den einzelnen Leitungen können beispielsweise auch Mittel 29 zum Einstellen des Durchflusses vorgesehen sein. Dieses Füllorgan weist dann drei Auslassöffnungen 9a,b,c auf, über die das Reinigungs-/Produktgemisch die Maschine wieder verlässt. Somit kann auch im gleichen Zwischenreinigungsschritt nicht nur das Förderwerk 8 und der Trichter sondern auch der Füllstromteiler sowie auch die Mittel zum Einstellen des Durchflusses 29 gereinigt werden.

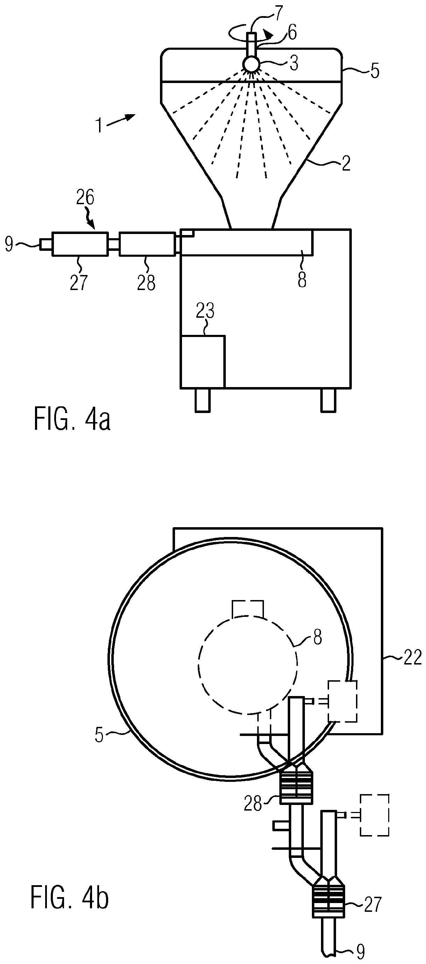

Es ist auch möglich, wie in Fig. 4a gezeigt ist, dass als Füllorgan ein Füllwolf vorgesehen ist, der hier zwei Zerkleinerungsstufen 28, 27 aufweist, die die pastöse Masse zerkleinern und Richtung Auslass 9 schieben können. Somit kann das Reinigungsproduktmedium auch die produktführenden Bereiche des Füllwolfes von Innen reinigen. Besonders vorteilhaft ist, wenn während des Reinigungsvorgangs die Messer in den Zerkleinerungsstufen 28, 27 in bekannter Weise bewegt werden, da die Bewegung der Messer die Reinigungswirkung fördert.

Bei den in Zusammenhang mit den Fig. 2 bis 4 beschriebenen Ausführungsformen mit Füllorgan ist dann z.B. der entsprechende Auslass 9 bzw. 9a,b,c mit der Leitung 17 verbunden.

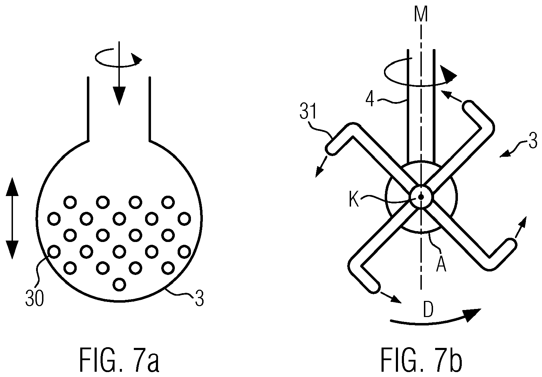

Die Fig. 7a-c zeigen verschiedene Ausführungen von Spritzeinrichtungen.

Die Spritzeinrichtung ist derart ausgebildet, dass die Innenfläche 2a des Trichters möglichst gleichmäßig durch Reinigungsmedium bzw. Wasserstrahlen gereinigt wird. Gemäß einer besonderen Ausführungsform, wie sie in Fig. 7a gezeigt ist, ist die Spritzeinrichtung als Sprühkugel ausgebildet. Die Sprühkugel 3 weist mehrere Öffnungen 30 auf, über die Reinigungsmedium auf die Trichterinnenwand 2a gespritzt wird. Die Öffnungen 30 können als Schlitze oder Bohrungen in der Hohlkugel vorgesehen sein. Die Öffnungen sind so angeordnet, dass der Spritzwinkel des Strahls zur Längsachse L des Trichters nicht konstant ist. Um zu verhindern, dass der jeweilige Strahl jeweils an der gleichen Stelle der Trichterinnenwand auftritt, ist der Sprühkopf, d.h. die Sprühkugel, rotierend ausgebildet. Aus diesem Grund ist der Sprühkopf, hier die Sprühkugel, um seine Mittelachse M rotierend ausgeführt. Der Sprühkopf kann dabei so ausgeführt werden, dass er z.B. vom Wasserdruck angetrieben wird und so eine rotierende Bewegung ausführt. Der Sprühkopf kann jedoch auch über einen entsprechenden Antrieb, z. B. elektrisch oder pneumatisch in Drehbewegung versetzt werden. Alternativ oder zusätzlich ist es auch möglich, über einen entsprechenden Antriebsmechanismus den Sprühkopf 3, wie durch den Pfeil dargestellt wird, von oben nach unten im Trichter zu bewegen. Dabei ist es dann beispielsweise vorteilhaft, wenn die Zuleitung 4 als flexibler Schlauch ausgebildet ist.

Fig. 7b zeigt eine weitere Ausführungsform einer Spritzeinrichtung, die als Düsenkopf ausgebildet ist. Dieser Kopf weist mehrere, z.B. vier Düsen 31 auf, wovon zwei jeweils gegenüberliegend und durch den Wasserdruck in Pfeilrichtung D um eine Achse K gedreht werden. Diese Achse K steht unter einem Winkel zur Achse M, vorzugsweise senkrecht zu einer Mittelachse M der Zuführleitung 4. Der Düsenkopf dreht sich zusätzlich auch um die Achse M, wie durch den Pfeil dargestellt ist. Somit ergibt sich eine sehr gleichmäßige Reinigung des Trichters, wobei auch Deckel und Trichterboden ausreichend gereinigt werden können.

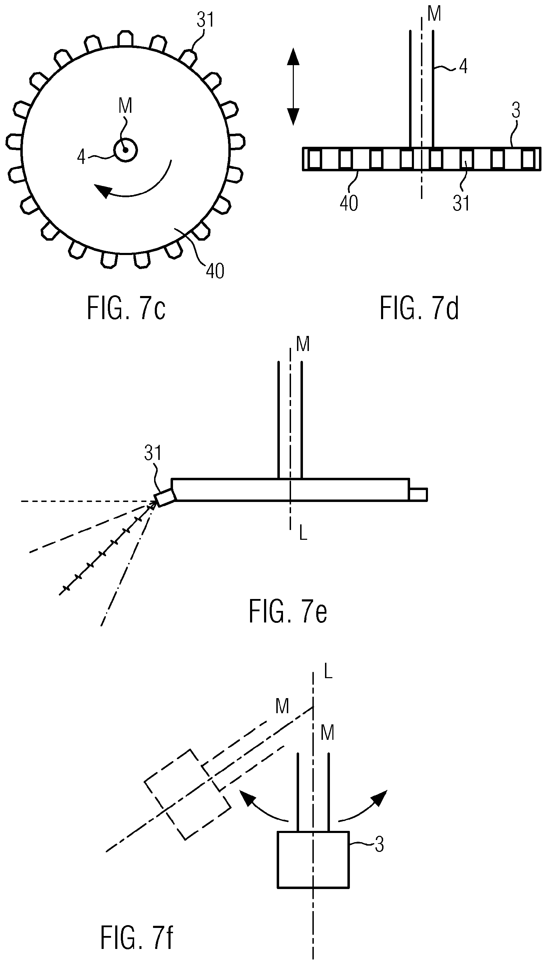

Fig. 7c zeigt eine Aufsicht auf eine weitere Ausführungsform eines Kopfes in Form eines Düsenrades. Über die Zuleitung 4 und das Rad bzw. dessen Hohlraum kann den einzelnen Düsen 31 Reinigungsmedium zugeführt werden. Die Düsen 31 sind gleichmäßig am Umfang des Rades angeordnet. Das Düsenrad kann entweder, wie in Fig. 7d gezeigt ist, auf und ab bewegt werden, wobei dann vorzugsweise die Leitung 4 wieder als flexibler Schlauch ausgebildet ist. Zusätzlich oder alternativ dazu können die entsprechenden Düsen 31 auch derart geneigt sein, dass ihr Spritzwinkel zur Längsachse L des Trichters sich bei unterschiedlichen Düsen 31 unterscheidet. (Fig. 7e)

Eine gleichmäßige Verteilung des Reinigungsmediums kann auch dadurch erzielt werden, dass entweder ein entsprechender Kopf in Bezug auf die mittlere Längsachse des Trichters hin und her bewegt wird oder aber von der Längsachse L verschwenkt wird (siehe Fig. 7f). Die bestimmten Ausführungen der Spritzeinrichtungen sind hier nur beispielhaft.

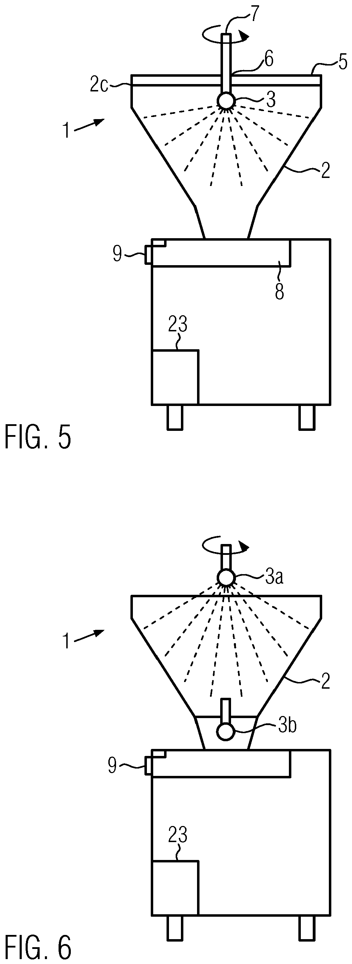

Wie in Fig. 5 gezeigt ist, kann alternativ zu dem Deckel 5, der bereits Teil der Füllmaschine ist, auch ein spezieller Spritzschutzdeckel 5 vorgesehen sein, der auf die Oberkante 2c des Trichters 2 aufgesetzt werden kann, und vorzugsweise aus transparentem Material gebildet ist oder zumindest ein Schauglas aufweist, um die Reinigung zu beobachten.

Wie in Fig. 6 gezeigt ist, kann auch noch ein zusätzlicher Spritzkopf 3b im Bereich oberhalb des Einlasses 32 des Förderwerks angeordnet sein, derart, dass zumindest ein Strahl direkt in das Förderwerk spritzt. Während des Betriebs der Füllmaschine kann dieser Spritzkopf 3b aus diesem Bereich entfernt, insbesondere nach oben verfahren werden.

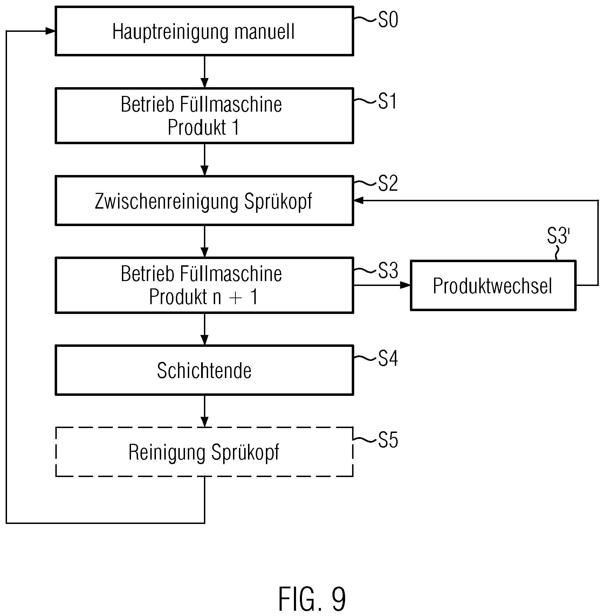

Das erfindungsgemäße Verfahren wird nachfolgend im Zusammenhang mit der Fig. 9 näher beschrieben.

Wie aus Fig. 9 hervorgeht, wird während einer Arbeitsschicht in einem ersten Schritt S1 die Füllmaschine mit einem ersten Produkt 1 betrieben. Vor dem Schritt 1 wurde sichergestellt, dass die Füllmaschine ausreichend gereinigt wurde und zwar in einem manuellen Reinigungsschritt S₀. Bei einer Hauptreinigung wird beispielsweise wie folgt vorgegangen. Es werden alle produktführenden Bereiche manuell gereinigt. Insbesondere wird wie folgt vorgegangen:
1. Zunächst wird das Förderwerk 8, hier also die Flügelzellenpumpe 8, geöffnet, indem der Deckel 36 geöffnet wird, hier nach oben weggeschwenkt. Dann werden alle zu reinigenden Komponenten, insbesondere der Rotor 35, die Pumpenflügel 33, ausgebaut.
2. Die entnommenen Komponenten werden manuell gereinigt, insbesondere mittels Hochdruckreiniger oder im Niederdruckverfahren mittels Reinigungsmittel, insbesondere Schaumreiniger.
3. Weiter werden die produktführenden Bereiche der Füllmaschine, wie beispielsweise der Trichterinnenbereich, der Zuführbereich, also der Übergang vom Trichter in das Förderwerk, z.B. mit der Zubringerkurve und der Gegenhaltekurve, Einlaufbereich zum Förderwerk, Auslaufbereich vom Förderwerk sowie nachfolgender Füllorgane, sofern vorhanden, gereinigt.
4. Schließlich werden die entnommenen Komponenten wieder eingebaut und das Förderwerk verschlossen.

Soll während einer Arbeitsschicht, in der mehrere unterschiedliche Produkte verarbeitet werden, ein Produktwechsel stattfinden, erfolgt zunächst in Schritt S2 ein Zwischenreinigungsschritt, in dem die produktführenden Bereiche mittels Spritzeinrichtung, vorzugsweise automatisch gereinigt werden. Dazu gibt der Bediener entweder die notwendigen Parameter ein, wie:
Reinigungsmitteldruck, Reinigungsmitteltemperatur, Dauer der Reinigung mit Reinigungsmittel, Menge des hinzudosierten Reinigungsmittels, Wassertemperatur, Wasserdruck, Temperatur des Wassers, Spüldauer mit Wasser, vorzugsweise wählt der Bediener jedoch ein Zwischenreinigungsprogramm aus einem Speicher der Steuerungseinrichtung 23 aus, das zu dem ersten Produkt passt.

Bei dem Zwischenreinigungsschritt wird also beispielsweise zunächst Reinigungsmedium, beispielsweise über die Leitung 13, 11 der Spritzeinrichtung 3 zugeführt. Über die Spritzeinrichtung 3 wird das Reinigungsmittel gleichmäßig auf die Innenfläche 2a des Trichters aufgebracht, derart, dass sich anhaftende Produktreste von der Innenfläche 2a lösen. Während und/oder nachdem über die Spritzeinrichtung 3 Flüssigkeit auf die Innenfläche 2a des Trichters aufgebracht wird, läuft das Förderwerk 8 und transportiert das Produkt-Reinigungsmittelgemisch in Richtung Auslauf 9. Das Produkt-Reinigungsmittelgemisch kann dann über den Leitungsabschnitt 17 und das geöffnete Ventil 21 über einen Filter 20 und die Rückführleitung 19 bei entsprechend geöffneten Ventilen 37, 12 erneut der Spritzeinrichtung 3 zugeführt werden. Am Ende der Reinigungszeit kann bei entsprechend geöffnetem Ventil das Produkt-Reinigungsmittelgemisch über die Ablaufleitungen 17, 18 verworfen werden. Es ist auch möglich, das Reinigungsmedium nicht im Kreislauf zu führen und sofort über die Leitungen 17, 18 zu verwerfen. Bei einem nicht automatischen Programm kann der Bediener dann den Reinigungsprozess so lang laufen lassen, bis über die Leitung 18 relativ klares Reinigungsmittel die Füllmaschine verlässt. Im Anschluss an eine Reinigung mit Reinigungsmedium, insbesondere Lauge, kann noch ein Spülschritt mittels Wasser auf die gleiche wie zuvor beschriebene Weise erfolgen.

Nach erfolgter Zwischenreinigung in Schritt S2 kann dann die Füllmaschine mit einem zweiten Produkt n+1 (n ∈ N) betrieben werden. Es findet mindestens ein Produktwechsel statt.

Nach Ende des Betriebs der Füllmaschine mit dem zweiten Produkt, bzw. n+1ten Produkt, entscheidet der Bediener oder die Steuerung, ob die Arbeitsschicht nun beendet ist oder ob erneut ein Produktwechsel erfolgt. Erfolgt, wie in Fig. 9 dargestellt ist, ein erneuter Produktwechsel in einem Schritt S3', so wird erneut, wie zuvor beschrieben, zuvor eine Zwischenreinigung entsprechend Schritt S2 durchgeführt und anschließend die Füllmaschine mit dem nächsten Produkt betrieben. Die Schritte S3 und S2 werden so lange wiederholt, bis der Bediener oder die Steuereinrichtung bestimmt, dass das Schichtende erreicht ist. Am Schichtende in Schritt S4 erfolgt dann die zuvor beschriebene manuelle Hauptreinigung S₀, damit die Füllmaschine bei der nächsten Arbeitsschicht ausreichend gereinigt ist.

Es kann auch zwischen dem Schichtende S4 und der Hauptreinigung S₀ eine Zwischenreinigung entsprechend Schritt S2 stattfinden, d.h. eine Zwischenreinigung mit Hilfe der Spritzeinrichtung.

Die einzelnen Parameter können einfach experimentell bestimmt werden und an unterschiedliche Füllmaschinengrößen und Produkte angepasst werden, wobei die einzelnen Parameter so bestimmt werden können, dass beobachtet wird, dass eine ausreichende Reinigung stattgefunden hat, wenn ein klares Reinigungsmedium den Auslauf 9 verlässt.

Wenn die Füllmaschine im Trichter eine Rühreinrichtung und/oder Fördereinrichtung, wie etwa Förderschnecke oder Zubringerkurve aufweist, ist es vorteilhaft, wenn diese Einrichtung(en) während des Zwischenreinigungsschritts angetrieben werden, insbesondere zumindest zeitweise während des Verteilens der Reinigungsflüssigkeit mittels Spritzeinrichtung.

## Patentansprüche

1. Füllmaschine (1), insbesondere zur Herstellung von Würsten mit
einem Trichter (2) zum Einfüllen von pastöser Masse und
einem Förderwerk (8) zum Fördern der pastösen Masse in Richtung einer Auslauföffnung (9), **dadurch gekennzeichnet, dass**
oberhalb oder innerhalb des Trichters (2) mindestens eine Spritzeinrichtung (3) zum Verteilen von Reinigungsmedium auf die Trichterinnenwand (2a) bei einer Zwischenreinigung vorgesehen ist und eine Steuerung (23) den Zwischenreinigungsprozess derart steuert, dass während des Zwischenreinigungsprozesses das Förderwerk (8) zumindest zeitweise läuft.

2. Füllmaschine (1) nach Anspruch 1, **dadurch gekennzeichnet, dass** die Spritzeinrichtung (3) als Sprühkopf oder Düsenkopf, insbesondere Düsenrad, ausgebildet ist.

3. Vorrichtung nach Anspruch 1 oder 2, **dadurch gekennzeichnet, dass** die Spritzeinrichtung (3) zum Verteilen von Reinigungsmedium beweglich ausgebildet ist und sich vorzugsweise um eine erste Achse (M) drehen kann, und/oder sich um eine zweite Achse (K) drehen kann, die unter einem Winkel, vorzugsweise senkrecht zur ersten Achse verläuft.

4. Füllmaschine (1) nach mindestens einem der Ansprüche 1 bis 3, **dadurch gekennzeichnet, dass** die Spritzeinrichtung (3) zum Verteilen von Reinigungsmedium im Trichter (2) auf und ab bewegbar ist und/oder seitlich hin und her bewegbar ist und/oder in Bezug zur Längsachse (L) des Trichters (2) verschwenkbar ist.

5. Füllmaschine (1) nach mindestens einem der vorhergehenden Ansprüche, **dadurch gekennzeichnet, dass** der Trichter (2) einen Deckel (5) umfasst, wobei vorzugsweise die Spritzeinrichtung (3) am Deckel (5) befestigt ist.

6. Füllmaschine (1) nach mindestens Anspruch 5, **dadurch gekennzeichnet, dass** der Deckel (5) einen Anschluss für das Reinigungsmedium aufweist.

7. Füllmaschine (1) nach mindestens einem der Ansprüche 1 bis 6, **dadurch gekennzeichnet, dass** die Füllmaschine (1) eine Steuerung (23) umfasst, zur Steuerung eines Zwischenreinigungsprogramms, wobei insbesondere in einem Speicher der Steuerung (23) unterschiedliche Reinigungsprogramme abgespeichert sind.

8. Füllmaschine (1) nach mindestens einem der Ansprüche 1 bis 7, **dadurch gekennzeichnet, dass** in Förderrichtung der pastösen Masse bzw. des Reinigungsmediums ein Füllorgan (24, 25, 26) angeordnet ist, insbesondere ein Füllrohr (24) oder ein Füllwolf (26) oder ein Füllstromteiler (25).

9. Füllmaschine (1) nach mindestens einem der Ansprüche 1 bis 8, **dadurch gekennzeichnet, dass** das Reinigungsmedium (9) über die Ablauföffnung (9) aus der Füllmaschine (1) gelangen kann und entweder über eine Ableitung (17, 18) verworfen werden kann oder eine Rückführleitung (19) vorgesehen ist, über die das Reinigungsmedium zumindest teilweise im Kreislauf (c) zum mindestens einen Mittel (3) rückgeführt werden kann.

10. Füllmaschine (1) nach mindestens einem der Ansprüche 1 bis 9, **dadurch gekennzeichnet, dass** mindestens ein Mittel zum Verteilen von Reinigungsmedium derart angeordnet ist, dass mindestens ein Strahl in den Einlass (30) des Förderwerks (8) spritzt.

11. Füllmaschine nach mindestens einem der Ansprüche 1 bis 10, wobei das Förderwerk vorwärts oder im Wechsel vorwärts oder rückwärts läuft.

12. Verfahren zum Zwischenreinigen einer Füllmaschine (1) nach mindestens einem der Ansprüche 1 bis 11, **dadurch gekennzeichnet, dass** bei einer Zwischenreinigung mit einer Spritzeinrichtung (3) Reinigungsflüssigkeit auf die Trichterinnenwand (2a) verteilt wird, und zumindest zeitweise während des Zwischenreinigungsprozesses ein Förderwerk der Füllmaschine (1) läuft.

13. Verfahren nach Anspruch 12, wobei beim Betrieb einer Füllmaschine folgende Schritte durchgeführt werden:
a) Betreiben der Füllmaschine (1) mit einem ersten Produkt,
b) Zwischenreinigung der Füllmaschine,
c) Produktwechsel und Betreiben der Füllmaschine mit einem zweiten Produkt, wobei Schritte b) und c) 0 bis n-mal (n ∈ IN) wiederholt werden und dann in Schritt
d) eine manuelle Hauptreinigung durchgeführt wird.

14. Verfahren nach Anspruch 13, **dadurch gekennzeichnet, dass** vor dem manuellen Hauptreinigungsschritt d) eine weitere Zwischenreinigung durchgeführt wird.

15. Verfahren nach mindestens einem der Ansprüche 12 bis 14, **dadurch gekennzeichnet, dass** für eine jeweilige Zwischenreinigung, insbesondere in Schritt b), Reinigungsparameter in Abhängigkeit des letzten verarbeiteten Produkts eingestellt werden und vorzugsweise ein entsprechendes Reinigungsprogramm aus mehreren, in einer Steuerung gespeicherten Reinigungsprogrammen in Abhängigkeit des letzten verarbeiteten Produkts, vorzugsweise automatisch, ausgewählt wird.

16. Verfahren nach Anspruch 15, **dadurch gekennzeichnet, dass** die Parameter umfassen:
Temperatur des Reinigungsmediums und/oder Druck des Reinigungsmediums und/oder Zeitdauer der Zwischenreinigung.

## Claims

1. Filling machine (1), in particular for the production of sausages with
a hopper (2) for filling in a pasty substance and
a conveying mechanism (8) for conveying said pasty substance in the direction towards an outlet opening (9), **characterized in that**
at least one spraying device (3) is provided above or within said hopper (2) for distributing a cleaning medium onto said hopper inner wall (2a) during an intermediate cleaning and a controller (23) controls said intermediate cleaning process such that said conveying mechanism (8) runs at least temporarily during said intermediate cleaning process.

2. Filling machine (1) according to claim 1, **characterized in that** said spraying device (3) is designed as a spray head or a nozzle head, in particular a nozzle wheel.

3. Device according to claim 1 or 2, **characterized in that** said spraying device (3) is designed to be movable for distributing a cleaning medium, and can rotate preferably about a first axis (M) and/or can rotate about a second axis (K) extending at an angle, preferably perpendicular to said first axis.

4. Filling machine (1) according to at least one of the claims 1 to 3, **characterized in that** said spraying device (3) is moveable up and down and/or movable laterally to and fro and/or is pivotable relative to the longitudinal axis (L) of said hopper (2) for distributing a cleaning medium in said hopper (2).

5. Filling machine (1) according to at least one of the preceding claims, **characterized in that** said hopper (2) comprises a cover (5), where preferably said spraying device (3) is attached at said cover (5).

6. Filling machine (1) according to at least claim 5, **characterized in that** said cover (5) comprises a connection for said cleaning medium.

7. Filling Machine (1) according to at least one of the claims 1 to 6, **characterized in that** said filling machine (1) comprises a controller (23) for controlling an intermediate cleaning program, where in particular different cleaning programs are stored in a memory of said controller (23).

8. Filling machine (1) according to at least one of the claims 1 to 7, **characterized in that** a filling element (24, 25, 26), in particular a stuffing tube (24) or an inline grinder (26), or a filling flow separator (25), is arranged in the direction of conveying said pasty substance or said cleaning medium.

9. Filling machine (1) according to at least one of the claims 1 to 8, **characterized in that** said cleaning medium (9) can exit from said filling machine (1) through said drain opening (9) and can be discarded either via a discharge line (17, 18), or a return line (19) is provided via which said cleaning medium can be returned at least partially to the circulation (c) to said at least one medium (3).

10. Filling machine (1) according to at least one of the claims 1 to 9, **characterized in that** at least one device for distributing said cleaning medium is arranged such that at least one jet sprays into the inlet (30) of said conveying mechanism (8).

11. Filling machine (1) according to at least one of the claims 1 to 10, wherein said conveying mechanism runs forward or alternatingly runs forward or backward.

12. Method for intermediate cleaning of a filling machine (1) according to at least one of the claims 1 to 11, **characterized in that** cleaning liquid is during intermediate cleaning distributed with a spraying device (3) onto said hopper inner wall (2a), and a conveying mechanism of said filling machine (1) runs at least temporarily during said intermediate cleaning process.

13. Method according to claim 12, wherein the following steps are performed during the operation of a filling machine:
a) operating said filling machine (1) with a first product,
b) intermediate cleaning of said filling machine,
c) product change and operating said filling machine with a second product, where steps b) and c) are repeated 0 to n times (n ∈ IN) and then in step
d) manual cleaning is performed.

14. Method according to claim 13, **characterized in that** further intermediate cleaning is performed prior to the manual main cleaning step d).

15. Method according to at least one of the claims 12 to 14, **characterized in that** cleaning parameters are in dependence of the last product processed set for respective intermediate cleaning, in particular in step b), and preferably a corresponding cleaning program is selected in dependence of the last product processed, preferably automatically, from a plurality of cleaning programs stored in a controller.

16. Method according to claim 15, **characterized in that** said parameters comprise: the temperature of the cleaning medium and/or the pressure of the cleaning medium and/or the duration of the intermediate cleaning process.

## Revendications

1. Machine de remplissage (1), en particulier pour la fabrication de saucisses avec une trémie (2) pour le remplissage avec une masse pâteuse et
un mécanisme d'acheminement (8) pour acheminer la masse pâteuse en direction d'un orifice de sortie (9), **caractérisée en ce que**
au moins un dispositif de pulvérisation (3) est prévu au-dessus et à l'intérieur de la trémie (2) pour disperser un fluide de nettoyage sur la paroi intérieure (2a) de la trémie lors d'un nettoyage intermédiaire et qu'un dispositif (23) commande le processus de nettoyage intermédiaire de telle manière que, pendant le processus de nettoyage intermédiaire, le mécanisme d'acheminement (8) fonctionne au moins par intermittence.

2. Machine de remplissage (1) selon la revendication 1, **caractérisée en ce que** le dispositif de pulvérisation (3) prend la forme d'une tête de pulvérisation ou d'une tête de buse, en particulier d'une roue d'injection.

3. Dispositif selon la revendication 1 ou 2, **caractérisé en ce que** le dispositif de pulvérisation (3) est conçu de manière à être déplaçable pour la dispersion du fluide de nettoyage et peut de préférence tourner autour d'un premier axe (M), et/ou autour d'un deuxième axe (K) formant un angle, de préférence perpendiculaire, au premier axe.

4. Machine de remplissage (1) selon au moins une des revendications 1 à 3, **caractérisée en ce que** pour la dispersion du fluide de nettoyage dans la trémie (2), le dispositif de pulvérisation (3) est déplaçable de haut en bas et/ou latéralement dans un mouvement de va et vient et/ou est pivotable par rapport à l'axe longitudinal (L) de la trémie (2).

5. Machine de remplissage (1) selon au moins une des revendications précédentes,
**caractérisée en ce que** la trémie (2) comprend un couvercle (5), le dispositif de pulvérisation (3) étant de préférence fixé sur le couvercle (5).

6. Machine de remplissage (1) selon au moins la revendication 5, **caractérisée en ce que** le couvercle (5) comporte un raccordement pour le fluide de nettoyage.

7. Machine de remplissage (1) selon au moins une des revendications 1 à 6,
**caractérisée en ce que** la machine de remplissage (1) comprend une commande (23) pour commander un programme de nettoyage intermédiaire, où différents programmes de nettoyage sont stockés, en particulier dans une mémoire de la commande (23).

8. Machine de remplissage (1) selon au moins une des revendications 1 à 7,
**caractérisée en ce qu'**un organe de remplissage (24, 25, 26), en particulier un tuyau de remplissage (24) ou un hachoir de remplissage (26) ou un séparateur de flux de remplissage (25), est disposé dans la direction d'acheminement de la masse pâteuse, respectivement du fluide de nettoyage.

9. Machine de remplissage (1) selon au moins une des revendications 1 à 8,
**caractérisée en ce que** le fluide de nettoyage (9) peut s'échapper de la machine de remplissage (1) via l'orifice de sortie (9) et soit être évacué via un conduit d'évacuation (17, 18), soit au moins partiellement retourné via le circuit (c) au au moins un moyen (3) via un conduit de retour (19) prévu à cette fin.

10. Machine de remplissage (1) selon au moins une des revendications 1 à 9,
**caractérisée en ce qu'**au moins un moyen de répartition d'un fluide de nettoyage est disposé de telle manière que au moins un jet est pulvérisé dans l'entrée (30) du mécanisme de acheminement (8).

11. Machine de remplissage selon au moins une des revendications 1 à 10, où le mécanisme d'acheminement avance ou bien avance et recule alternativement.

12. Procédé de nettoyage intermédiaire d'une machine de remplissage (1) selon au moins une des revendications 1 à 11, **caractérisé en ce que** lors d'un nettoyage intermédiaire, un fluide de nettoyage est distribué par un dispositif de pulvérisation (3) sur la paroi intérieure (2a) de la trémie et qu'un mécanisme d'acheminement de la machine de remplissage (1) fonctionne au moins par intermittence pendant le processus de nettoyage intermédiaire.

13. Procédé selon la revendication 12, où les étapes suivantes sont exécutées lors du fonctionnement de la machine de remplissage :
a) faire fonctionner la machine de remplissage (1) avec un premier produit,
b) effectuer un nettoyage intermédiaire de la machine de remplissage,
c) changer de produit et faire fonctionner la machine de remplissage avec un deuxième produit,
où les étapes b) à c) sont répétées 0 à n fois (n E IN) et à l'étape
d) un nettoyage principal manuel est réalisé.

14. Procédé selon la revendication 13, **caractérisé en ce qu'**un autre nettoyage intermédiaire est réalisé avant l'étape de nettoyage principal manuel d).

15. Procédé selon au moins une des revendications 12 à 14, **caractérisé en ce que** pour un nettoyage intermédiaire respectif, en particulier à l'étape b), des paramètres de nettoyage sont réglés en fonction du dernier produit traité et que, de préférence, un programme de nettoyage correspondant est choisi, de préférence automatiquement, parmi plusieurs programmes de nettoyage stockés dans une commande, en fonction du dernier produit traité.

16. Procédé selon la revendication 15, **caractérisé en ce que** les paramètres comprennent : la température du fluide de nettoyage et/ou la pression du fluide de nettoyage et/ou la durée du nettoyage intermédiaire.
